# EUROPÄISCHE PATENTANMELDUNG

(11) **EP 4 234 969 A1**
(43) Veröffentlichungstag der Anmeldung: **30.08.2023**
(21) Anmeldenummer: 23150836.7
(22) Anmeldetag: 10.01.2023
(51) Int. Cl.: F16D 51/32, F16D 51/42, F16D 65/08, F16D 65/22, F16D 51/36, F16D 65/10

(54) **FAHRZEUG-TROMMELBREMSE, INSBESONDERE FÜR NUTZFAHRZEUGE**

(30) Priorität: 23.02.2022 DE 102022104343
(71) Anmelder: ZF CV Systems Global GmbH, 3006 Bern (CH)
(72) Erfinder: HENNING, Paul, 68723 Schwetzingen (DE)
(74) Vertreter: Ohlendorf, Henrike

(57) **Zusammenfassung**

Die Erfindung betrifft eine Fahrzeug-Trommelbremse (1), insbesondere für Nutzfahrzeuge, mit einer Trommel (3) mit einer umlaufend ausgebildeten inneren Reibfläche (21), einem relativ zu der Trommel (3) drehbeweglich innerhalb der Trommel (3) angeordneten Bremsträger (5) und einer an dem Bremsträger (5) angeordneten Bremsbelagsanordnung (7). Es wird vorgeschlagen, dass die Bremsbelagsanordnung (7) eine Mehrzahl radial beweglicher Belagträger (11) aufweist, an denen jeweils ein Bremsbelagsegment (9) der Reibfläche (21) zugewandt vorgesehen ist, wobei die Belagträger (11) jeweils unmittelbar mit einem gemeinsamen Nockenring (13) derart wirkverbunden sind, dass eine Rotationsbewegung des Nockenrings (13) in einer ersten Drehrichtung eine synchrone Zuspannbewegung aller Belagträger (11) bewirkt, und eine Rotationsbewegung des Nockenrings (13) in einer entgegengesetzten zweiten Drehrichtung eine synchrone Aufspannbewegung aller Belagträger (11) bewirkt.

## Beschreibung

Die Erfindung betrifft eine Fahrzeug-Trommelbremse, insbesondere für Nutzfahrzeuge, mit einer Trommel mit einer umlaufend ausgebildeten inneren Reibfläche, einem relativ zu der Trommel beweglich angeordneten Bremsträger und einer an dem Bremsträger angeordneten Bremsbelagsanordnung. Die Erfindung betrifft insbesondere eine Zero-Emission-Trommelbremse.

Trommelbremsen der eingangs bezeichneten Art sind allgemein bekannt. Sie werden üblicherweise in Anwendungsfällen eingesetzt, wenn ein emissionsarmer Betrieb, d.h. ein Betrieb gewünscht wird, bei dem möglichst geringe Mengen an Staub oder anderem Bremsabrieb in die Umwelt gelangen sollen. Trommelbremsen sind weit verbreitet im Nutzfahrzeugsektor, so wie vereinzelt im PKW-Sektor, beispielsweise an der Hinterachse von Privatkraftfahrzeugen oder in Fahrzeugen mit Elektroantrieben, in denen aufgrund der Möglichkeit, mittels der elektrischen Maschinen regenerativ zu bremsen, im Betrieb weniger starker Gebrauch von konventionellen Reibbremsen gemacht werden muss.

Das allgemeine Funktionsprinzip der Trommelbremsen ist, dass die Bremsbelagsanordnung mittels eines Aktuator-Mechanismus gegen die Trommel gepresst wird. Im Stand der Technik sind Trommelbremsen mit einem oder zwei Bremsbelägen bekannt, bei denen ein linearer Aktuator, oder ein sichelförmiger Nockenkopf gegen die Bremsbelaganordnung bewegt werden, und die Bremsbelaganordnung gegen die Trommel drücken. Hierbei kommt es prinzipbedingt und abhängig von der Drehrichtung der gebremsten Räder zu Selbstverstärkungseffekten, die beim Beherrschen des Bremsverhaltens unerwünscht sein können. Ferner ist bei längeren Verzögerungsvorgängen das temperaturbedingte und geschwindigkeitsabhängige Fading eine technische Herausforderung, die die Einsatzgebiete der Trommelbremsen einschränkt.

Auch ist aufgrund der Größe der Bremsbeläge in der Bremsbelagsanordnungen aus dem Stand der Technik häufig ein ungleichmäßiger Verschleiß zu beobachten, insbesondere ein auslaufseitig höherer Verschleiß als am einlaufseitigen Ende der Bremsbeläge.

Aufgrund des nach wie vor bestehenden Bedarfs an zuverlässigen Trommelbremsen lag der Erfindung daher die Aufgabe zugrunde, eine Fahrzeugtrommelbremse der eingangs bezeichneten Art dahingehend zu verbessern, dass die Nachteile aus dem Stand der Technik möglichst weitgehend überwunden werden. Insbesondere lag der Erfindung die Aufgabe zugrunde, eine Fahrzeug-Trommelbremse anzugeben, die weniger stark zur Selbstverstärkung neigt, vorzugsweise ein verbessertes Verschleißverhalten zeigt, und besonders bevorzugt zuverlässig betrieben werden kann.

Die Erfindung löst die ihr zugrunde liegende Aufgabe bei einer Fahrzeug-Trommelbremse der eingangs bezeichneten Art, indem die Bremsbelagsanordnung eine Mehrzahl radial beweglicher Belagträger aufweist, an denen jeweils ein Bremsbelagsegment der Reibfläche zugewandt vorgesehen ist, wobei die Belagträger jeweils unmittelbar mit einem gemeinsamen Nockenring derart wirkverbunden sind, dass eine Rotationsbewegung des Nockenrings in einer ersten Drehrichtung eine synchrone Zuspannbewegung aller Belagträger bewirkt, und eine Rotationsbewegung des Nockenrings in einer entgegengesetzten zweiten Drehrichtung eine synchrone Aufspannbewegung aller Belagträger bewirkt.

Die Erfindung folgt dem Ansatz, dass der Effekt der Selbstverstärkung minimiert werden kann, indem die Anzahl der Bremsbelagsegmente, und damit die Anzahl der Belagträger signifikant erhöht wird. In einer bevorzugten Weiterbildung bewegt sich die Mehrzahl der Belagträger in einem Bereich von sechs Stück oder mehr, vorzugsweise acht Stück oder mehr, besonders bevorzugt in einem Bereich von 12 Stück oder mehr. Die Belagträger sind vorzugsweise gleichmäßig über den Umfang des Bremsträgers verteilt angeordnet. Durch die Erhöhung der Anzahl der Bremsbeläge, und die gleichmäßige Verteilung dieser Bremsbeläge über den Umfang der Trommel und des Bremsträgers wird eine im Vergleich zum Stand der Technik signifikant verbesserte Kraftverteilung erzielt.

Weiter vorzugsweise sind die Bremsbelagsegmente jeweils zur vollflächigen Anlage an der Trommel eingerichtet, weisen also eine mit der Krümmung der Reibfläche korrespondierende konvexe Wölbung auf. Dadurch wird eine volle Ausnutzung der Belagfläche gewährleistet, anders als häufig beim Stand der Technik.

Gemeinsam mit der radialen Bewegungsführung der Belagträger wird sowohl die Tendenz zur Selbstverstärkung bekämpft, weil die Krafteinwirkung unabhängig von der Drehrichtung auf die Belagträger nur noch von dem Aktuationsweg des Nockenrings abhängt und die sich hieraus ergebende Gegenkraft nicht mehr vom Drehsinn der Trommel beeinflusst wird. Zudem ist der Verschleiß minimiert, weil die Anzahl der Reibpartner und die Verteilung über den Umfang der Trommel verbessert wird. Die Verwendung eines Nockenrings macht es möglich, über den gesamten Umfang eine sehr gleichmäßige synchrone Bewegung aller Bremsbelagsegmente zu erzielen und dennoch alle Bremsbelagsegmente im Wesentlichen exakt radial zu bewegen.

Durch die Verwendung des Nockenrings zum Antrieb der Belagträger wird ein höherer Anteil der Reibfläche der Trommel mit Bremsbelägen beaufschlagt werden kann als im Stand der Technik. Dadurch sinkt auch die Neigung zum sogenannten Fading im Vergleich zum Stand der Technik.

In einer bevorzugten Ausführungsform der Erfindung weist der Nockenring für jedes Bremsbelagsegment einen Nockenabschnitt mit einem in der ersten Drehrichtung zunehmenden Hub auf, wobei die Belagträger jeweils an einem der Nockenabschnitte anliegen. Der Nockenring erhält durch die Vielzahl der über den Umfang verteilten Nockenabschnitte eine entfernt sägezahnartige Geometrie, bei der die in der ersten Drehrichtung ansteigenden Nockenabschnitte gewissermaßen die "flachen" Zahnflanken darstellen.

In einer weiteren bevorzugten Ausführungsform weisen die Belagträger einen dem Nockenabschnitt zugewandten Kolben auf, der radial beweglich in dem Bremsträger angeordnet und dazu eingerichtet ist, mittels Verdrängung durch den Nockenabschnitt bei Rotation des Nockenrings zwischen einer zugespannten Bremsstellung und einer aufgespannten Freilaufstellung hin und her bewegt zu werden.

Der maximale Hub des Kolbens entspricht dem Hub des jeweiligen Nockenabschnitts, und kann durch entsprechende Dimensionierung des Nockenrings konstruktiv einfach so gestaltet werden, dass er zuverlässig den Bereich der maximalen Belagdicke plus einem Zuschlag für thermische Ausdehnung überspannt. Die Geometrie des Nockenrings und der Nockenabschnitte kann mit hoher Präzision gefertigt werden, wodurch auf konstruktiv einfache Weise sichergestellt wird, dass alle Belagträger mit ihren Kolben bei der Rotationsbewegung des Nockenrings den gleichen Zuspannweg bzw. Aufspannweg zurücklegen.

Die gezwungene Synchronisation der Kolben und damit der Bremsbelagsegmente sorgt zudem im Einlaufverhalten der Bremse bei der ersten Betriebsaufnahme schon nach wenigen Bremsungen für eine sehr homogene Verteilung der Verzögerungskraft, weil fertigungsbedingte Belagdickenunterschiede an den Bremsbelagsegmenten sehr rasch ausgeglichen werden. Diejenigen Bremsbelagsegmente, deren Bremsbeläge eine größere Dicke aufweisen, werden während der ersten Bremsungen einem höheren Verschleiß ausgesetzt, was sich aber ändert, sobald sie eine Dicke erreicht haben, die denjenigen Dicken der anderen Bremsbelagsegmente entspricht. Somit bleibt das System auch bei längerer Nutzungsdauer stets homogen im Verschleiß. In einer weiteren bevorzugten Ausführungsform weist der Kolben an seinem dem Nockenabschnitt zugewandten Ende einen am Kolben gelagerten Rollenkörper auf, der dazu eingerichtet ist, auf den Nockenabschnitt abzurollen. Die Verwendung eines Rollenkörpers stellt eine vorteilhafte, verschleißarme und langlebige Kopplungsmöglichkeit zwischen Nockenabschnitt und Kolben dar, die die Bremsperformance weiter vorteilhaft beeinflusst.

In einer weiteren bevorzugten Ausführungsform sind die Belagträger in Richtung der Freilaufstellung gegen den Bremsträger vorgespannt. Durch die Vorspannung der Belagträger in Richtung der Freilaufstellung, also radial nach Innen, wird etwaiges fertigungsbedingtes Bewegungsspiel zuverlässig aus dem System eliminiert. Die Bremse arbeitet auch bei äußeren Vibrationen zuverlässig und verschleißhomogen.

Vorzugsweise weist die Trommelbremse einen Federring auf, der einerseits an den Belagträgern angreift und andererseits an dem Bremsträger, und der für jeden Belagträger ein oder mehrere Federelemente aufweist, welche dazu eingerichtet sind, auf den jeweiligen Bremsbelagträger eine Rückstellkraft in Richtung der Freilaufstellung aufzubringen. Dadurch, dass die Federelemente alle an einem einzelnen Federring angeordnet sind, können sämtliche Federelemente bei der Montage der Trommelbremse mit einem einzigen Arbeitsgang installiert werden, beispielsweise indem der Federring in axialer Richtung aufgeschoben wird und sich die Federelemente so zwischen den Belagträger und den Bremsträger schieben.

In einer weiteren bevorzugten Ausführungsform weisen die Belagträger jeweils ein oder mehrere Stützelemente auf, insbesondere in Form von radial nach Innen vorstehenden Stegen. Die Stützelemente sind vorzugsweise dazu eingerichtet, die Belagträger in axialer Richtung, bezogen auf die Rotationsachse des Noppenrings, abzustützen, insbesondere eine radiale Führung bereitzustellen.

In einer weiteren bevorzugten Ausführungsform liegen die Federlemente an den Stützelementen an, vorzugsweise korresponiderend zu den Federelementen ausgebildeten Stegvorsprüngen, die in Umfangsrichtung von den Stegen vorstehen.

In einer weiteren bevorzugten Ausführungsform ist zwischen zwei benachbarten Belagträgern jeweils ein sich nach außen erstreckender Vorsprung angeordnet, an dem die Belagträger in Umlaufrichtung abgestützt sind, und von dem die Belagträger vorzugsweise parallel zur Bewegungsrichtung der Kolben beweglich geführt sind. Die Radialbewegung der Kolben kann in bevorzugten Alternativen also entweder von den Vorsprüngen zwischen den benachbarten Belagträgern realisiert werden oder von den Stützelementen. Gemäß dieser Ausführungsform wird jedenfalls für alle Belagträger in beide Bewegungsrichtungen der Trommel eine Drehmomentstütze bereitgestellt, die wiederum gemeinsam mit den Drehmomentstützen eine sehr homogene Kraftverteilung und Ableitung von der Trommel über den Bremsträger ermöglicht. Je höher die Anzahl der verwendeten Belagträger ist, desto mehr Kraftableitungsmöglichkeiten bieten sich und desto feiner können sowohl die Wandstärken der Belagträger als auch der Drehmomentstützen, d.h. Vorsprünge ausgeführt werden.

In einer weiteren bevorzugten Ausführungsform weist der Nockenabschnitt eine Verdrängungsfläche auf, die in einem Bereich zwischen der Freilaufstellung und der Bremsstellung eine zum Drehwinkel des Nockenrings proportionale Hubentwicklung aufweist. Die Kontur des Nockenabschnitts nimmt dadurch eine leicht konvexe Wölbung an, da sich bei einer linear ausgebildeten Nockenflanke mit zunehmendem Drehwinkel ein höherer Anstellwinkel relativ zum Kolben ergeben würde, und die Hubentwicklung dann progressiv verliefe. Es kann in bevorzugten Ausführungsformen allerdings eine nicht proportionale Hubentwicklung gewünscht sein, beispielsweise mit einem hohen Verhältnis von Hub zu Drehwinkel im Bereich der Freilaufstellung, und mit einem einer geringen Hubentwicklung relativ zum Drehwinkel im Bereich der Bremsstellung. Hierdurch wird einerseits eine schnelle Überbrückung des Lüftspiels ermöglicht, und andererseits eine hohe Kraftentfaltung, wenn die Bremsbelagsegmente in Anlage mir der Trommel stehen.

In einer bevorzugten Ausführungsform weist der Bremsträger eine elektromotorische Antriebseinrichtung auf, welche eine Anzahl von Elektromotoren zum Antrieb des Nockenrings aufweist. Grundsätzlich ist die Verwendung eines einzelnen Elektromotors erfindungsgemäß möglich und vorteilhaft. Aus Sicherheitsaspekten heraus ist es aber ein besonderer Vorteil der Erfindung, mehr als einen Elektromotor verbauen zu können.

Vorzugsweise werden zwei oder mehr Elektromotoren in der elektromotorischen Antriebseinrichtung vorgesehen und zum Antrieb des Nockenrings eingesetzt. Es können hierbei mehrere Elektromotoren identisch ausgestaltet sein und arbeitsteilig gemeinsam beispielsweise die Betriebsbremsfunktion und die Not- oder Parkbremsfunktion ausüben. Es können aber auch unterschiedlich dimensionierte Elektromotoren vorgesehen werden, die jeweils eigene Aufgaben ausüben, wonach beispielsweise ein erster Elektromotor die Betriebsbremsfunktionalität abwickeln könnte, und ein zweiter Elektromotor die Parkbrems- und Notbremsfunktion. Ein besonderer Vorteil des Nockenrings in Verbindung mit der Verwendung von Elektromotoren ist allerdings die Variabilität: Die Elektromotoren können an beliebiger Stelle relativ zum Nockenring positioniert sein, denn die Kreisbewegung des Nockenrings ist unabhängig davon immer dieselbe. Die Ausnutzung von Bauraumgegebenheiten wird hierdurch unterstützt.

In einer besonders bevorzugten Ausgestaltung weist die Antriebseinrichtung ein Zahlradgetriebe auf, welches die Anzahl der Elektromotoren koppelt. Das Getriebe ist vorzugsweise ein einstufiges Getriebe, besonders bevorzugt ein Stirnradgetiriebe. Weiter vorzugsweise weist der Nockenring eine Verzahnung auf, mit welcher eine Anzahl korrespondierender Antriebsritzel in Eingriff stehen, welche wieder jeweils drehmomentübertragend an einem Elektromotor befestigt sind. Das Antrieben des Nockenrings über einen direkt mittels Getriebe mit dem Nockenring gekoppelten Elektromotor, beziehungsweise mehrere davon, zieht einen hervorhebenswerten Vorteil nach sich: Trommelbremsen aus dem Stand der Technik wurden in der Regel Gestängesteller vorgeschaltet, um bei konstantem Hub der pneumatischen Bremszylinder und zunehmendem Verschleiß der Bremsbeläge das Lüftspiel nachstellen zu können. Eine lineare Bewegung eines pneumatisch angetriebenen Hubkolbens wurde über den Stellhebel in eine Rotationbewegung umgesetzt. Dies alles ist bei der Verwendung eines Nockenrings mit einem elektromotorischen Antrieb nicht mehr notwendig: Es kann der Nockenring direkt rotatorisch angetrieben werden. Da zudem die Ansteuerung mittels Elektromotoren recht genau vorgenommen werden kann, was den Verstellweg, also den Drehwinkel des Nockenrings, angeht, kann auf eine Gestängenachstelleinheit vollständig verzichtet werden. Verschleißen die Bremsbeläge, kann das Lüftspiel dennoch klein gehalten werden, indem der Elektromotor nicht in die ursprüngliche Freilaufposition zurückverfahren wird, was ein vollständiges Herausfahren der Kolben radial nach Innen bewirken würde, sondern relativ von der Bremsstellung gesehen nur um einen verminderten Drehwinkel wieder in die zweite Drehrichtung zurückbewegt wird. Die Bremsbelagsegmente müssen nur soweit aus der Bremsstellung herausbewegt werden, dass sie zuverlässig außer Eingriff mit der Trommel geraten. Die dafür nötigen Drehwinkel der Elektromotoren lassen sich wiederholgenau einstellen und anfahren.

Durch die Kombination von einstufigem Getriebe und Elektromotor am Nockenring ist zudem ein unabhängig vom eingestellten Winkelbereich konstantes Antriebsdrehmoment gewährleistet, so dass als Einflussgröße auf die Kraftübertragung lediglich die Steigung des Nockenabschnittes berücksichtigt werden muss.

In einer weiteren bevorzugten Ausführungsform ist der Nockenring mittels einer Wälzlageranordnung am Bremsträger gelagert. Die Wälzlageranordnung kann vorzugsweise ein Nadellager oder mehrere segmentierte Nadellageranordnungen umfassen.

In einer weiteren bevorzugten Ausführungsform sind die Bremsbeläge und die Belagträger mittels Pressen miteinander verbunden. Auch dies ist eine vorteilhafte Weiterentwicklung gegenüber dem Stand der Technik, in welchem die Bremsbeläge aufgrund ihrer Größe und Geometrie üblicherweise am Belagträger festgenietet werden mussten. Da die Einzelfläche der Bremsbelagsegmente deutlich kleiner ist und nur einen kleinen Winkelbereich überspannt, ist ein Einpressen der Bremsbeläge in die Belagträger nunmehr möglich, was eine deutliche Vereinfachung der Herstellung mit sich bringt.

Die Erfindung wird im Folgenden unter Bezugnahme auf die beigefügten Figuren anhand eines bevorzugten Ausführungsbeispiels näher beschrieben. Hierbei zeigen:

Hierin zeigt:
- Figur 1:: eine schematische räumliche Ansicht, teilweise freigeschnittene Ansicht, einer Trommelbremse gemäß einem bevorzugten Ausführungsbeispiel,
- Figur 2:: eine weitere räumliche, teilweise ausgeschnittene Ansicht der Trommelbremse gemäß Figur 1,
- Figur 3:: eine schematische Draufsicht auf die Trommelbremse gemäß der Figuren 1 und 2,
- Figur 4:: einen vergrößerten Ausschnitt der Ansicht gemäß Figur 2,
- Figur 5:: eine Detailansicht im Querschnitt in der Ausrichtung gemäß Figur 3,
- Figur 6:: eine weitere Detailansicht der Trommelbremse gemäß den Figuren 1 bis 5, und
- Figur 7:: eine schematische räumliche Seitenansicht der Trommelbremse gemäß den Figuren 1 bis 6 in andere Orientierung.

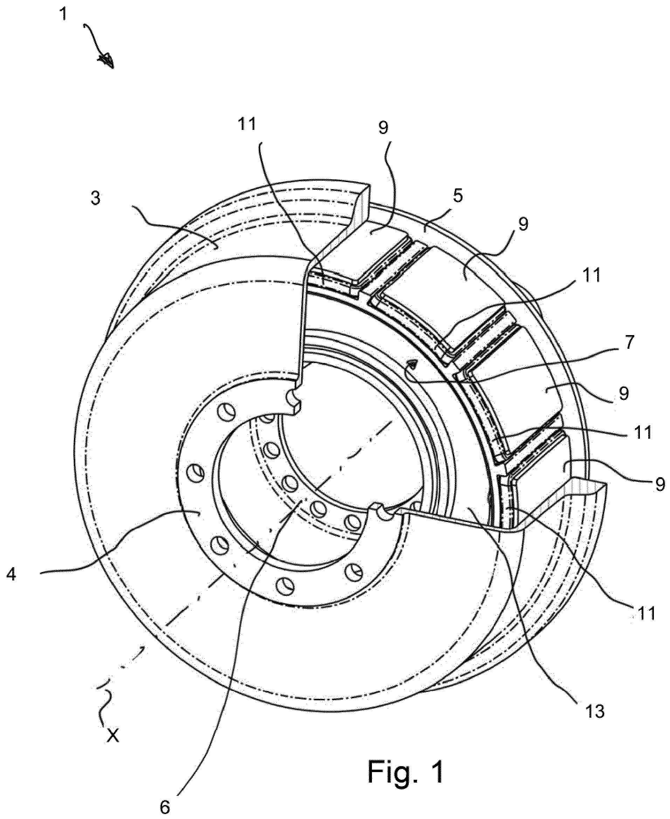

In Figur 1 ist eine Trommelbremse 1 gemäß einem bevorzugten Ausführungsbeispiel der Erfindung gezeigt. Die Trommelbremse 1 ist eine Nutzfahrzeugtrommelbremse in geschlossener Bauart, eine sogenannte Zero-Emission-Trommelbremse. Die Trommelbremse 1 weist eine Trommel 3 auf, mit einem Flansch 4 zur Befestigung am Rad. Die Trommelbremse 1 weist ferner einen Bremsträger 5 auf, der mit der Trommel 3 gemeinsam ein Gehäuse bildet. Der Bremsträger 5 weist ebenfalls einen Flansch 6 auf, mittels dessen der Bremsträger 5 am Fahrzeug befestigt werden kann.

Im Inneren des von der Trommel 3 und dem Bremsträger 5 gebildeten Gehäuses ist eine Bremsbelagsanordnung 7 angeordnet. Die Bremsbelagsanordnung 7 weist eine Vielzahl von Bremsbelagsegmenten 9 auf, nämlich insgesamt 12 Stück, die jeweils in einem radial beweglichen Belagträger 11 eingepresst sind, wobei der Belagträger 11 radial beweglich am Bremsträger 5 geführt ist. Die Verstellbewegung der Belagträger 11 mit dem Bremsbelagsegmenten 9 erfolgt über einen rotatorisch um eine Achse X in der Trommelbremse 1 gelagerten Nockenring 13. Die folgenden Figuren geben näheren Aufschluss über den inneren Aufbau der Trommelbremse 1. In den Figuren werden gleiche Bezugszeichen für strukturelle und funktional gleiche Elemente verwendet, weswegen jeweils auch auf die übrigen Figuren zur Vermeidung von Wiederholungen verwiesen wird.

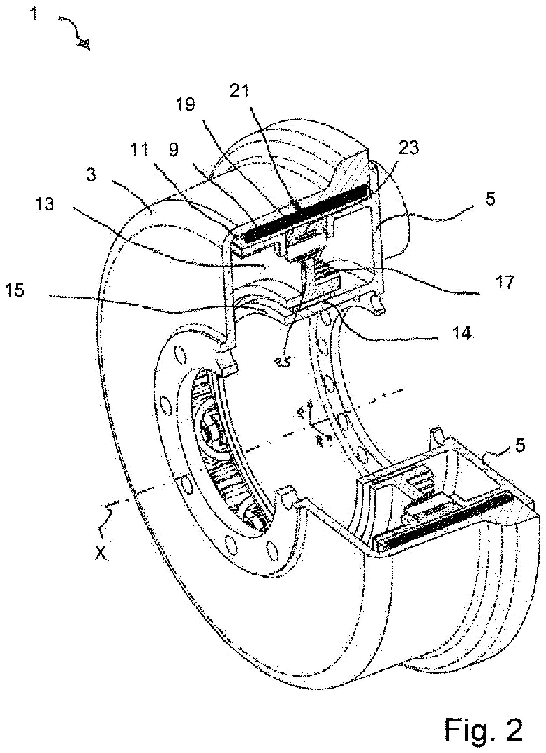

Wie sich aus Figur 2 ergibt, ist der Nockenring 13 mittels einer Wälzlageranordnung 14 auf einem Stutzen 15 des Bremsträgers 5 gelagert und in nicht näher dargestellter Weise axial abgestützt. Der Nockenring 13 weist zum rotatorischen Antrieb um die Achse X eine Außenverzahnung 17 auf, auf deren Wirkweise später eingegangen wird. Die Belagträger 11 sind jeweils mittels eines Kolbens 19 bezogen auf die Achse X radial beweglich am Bremsträger 5 angeordnet. Angedeutet durch die Pfeile R für die freigeschnittenen Kolben 19.

Durch die radiale Verstellbewegung drücken die Kolben 19 ihren jeweiligen Belagträgern 11 und das darin eingepresste Bremsbelagsegment 9 gegen die Reibfläche 21 der Trommel 3. Auf der von der Reibfläche 21 abgewandten Seite weisen die Kolben einen drehbar gelagerten Rollenkörper 23 auf, der auf einem Nockenabschnitt 25 des Nockenrings 13 abrollt, was aus den folgenden Figuren besser ersichtlich wird.

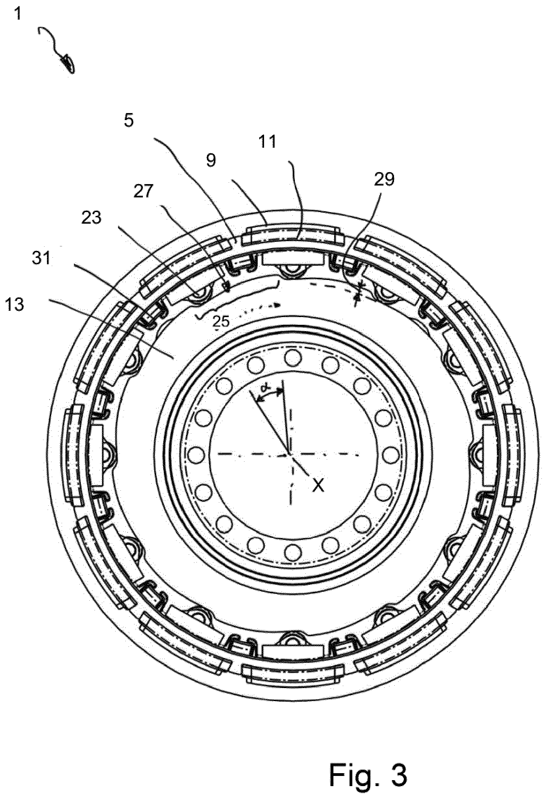

Wie sich aus der Draufsicht gemäß Figur 3 erkennen lässt, weist der Nockenring 13 eine Vielzahl von Nockenabschnitten 25 auf, die jeweils eine Verdrängungsfläche 27 definieren, auf welcher jeweils ein Rollkörper 23 über ein Winkelbereich α abrollen kann. Die Nockenabschnitte 25 erzeugen über den Winkelbereich α einen maximalen Hub 29, der sich infolge einer Hubentwicklung ergibt, die proportional zum Winkel α ist. Hierdurch ergibt sich eine leicht konvexe Wölbung der Verdrängungsflächen 27 in den Nockenabschnitten 25. Durch diese Geometrie des Nockenrings 7 ist eine sehr präzise Synchronisierung der Hubbewegungen der Belagträger 11 möglich.

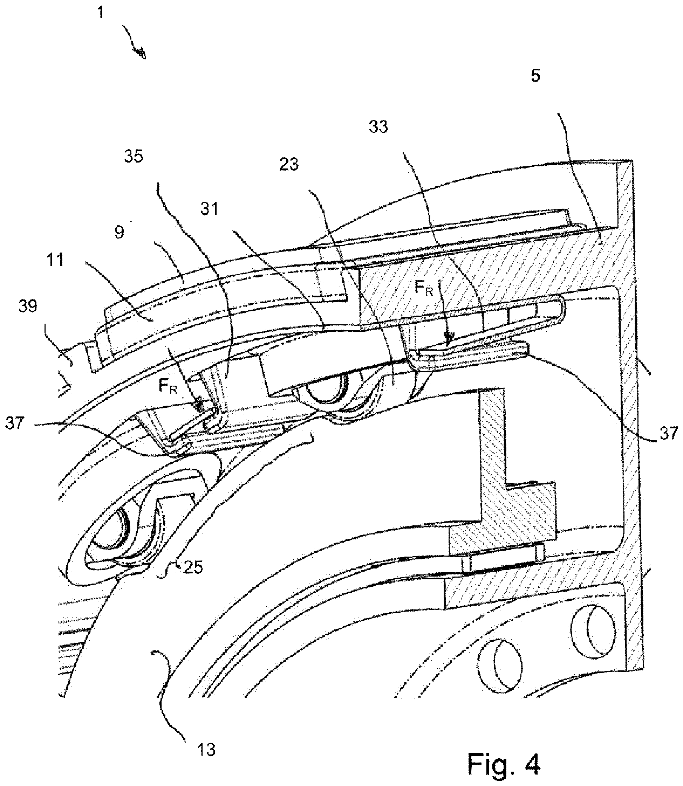

Damit ein zuverlässiger und klapperfreier Betrieb der Trommelbremse 1 möglich ist, sind die Belagträger 11 in radialer Richtung nach innen mittels eines Federring 31 vorgespannt, dessen Aufbau näher in Figur 4 dargestellt ist.

Der in Figur 4 gezeigte Ausschnitt der Trommelbremse 1 legt den Blick frei auf den Federring 31 im montierten Zustand. Der Federring 31 weist eine der Anzahl der Bremsbelagsegmente 9 und Belagträgern 11, die sich in axialer Richtung erstrecken und zwischen dem Bremsträger 5 einerseits und dem Belagträger 11 andererseits angeordnet sind und eine Rückstellkraft F_{R} auf den Belagträger 11 ausüben, die den Belagträger 11 in Richtung seiner radial inneren Freilaufposition, in Figur 4 dargestellt, vorspannt. Wird der Nockenring 13 in Rotation versetzt, weichen die Belagträger 11, verursacht durch die Abrollbewegung der Rollenkörper 23 entlang der Nockenabschnitte 25 in radialer Richtung gegen die Rückstellkraft F_{R} aus.

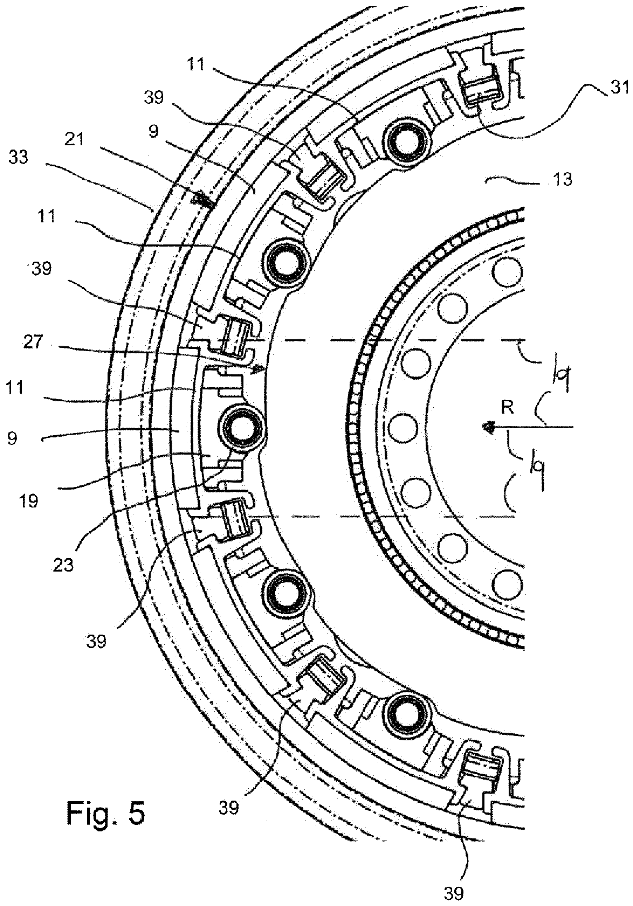

Die Belagträger 11 weisen zur besseren Wirkverbindung mit den Federelementen 33 Stützelemente 35 auf, die sich im Wesentlichen stegförmig radial nach innen erstrecken, und von denen aus Stegvorsprünge 37 in Umlaufrichtung abstehen. Auf diesen Stegvorsprüngen 37 kommen die Federelemente 33 zur Auflage. Vorzugsweise dienen die Stützelemente 35 zugleich zum Abstützen der Belagträger 11 in Richtung der Achse X. Die Abstützung der Belagträger 11 in Umfangsrichtung erfolgt anhand sich nach außen erstreckender Vorsprünge 39 am Bremsträger 5, was in Figur 5 näher gezeigt ist.

Wie in Fig. 5 zu erkennen ist, bewegen sich die Kolben 19 bei einer Drehbewegung des Nockenrings 13 synchron entlang des Pfeils R radial nach außen und schieben dadurch die Belagträger 11 ebenfalls radial nach außen, was zu einer Annäherung der Bremsbelagsegmente 9 an die Reibfläche 21 der Trommel 3 führt. Um die Bremskräfte ableiten zu können, sind die Belagträger 11 in Umfangsrichtung beiderseits durch jeweils einen sich nach außen erstreckenden Vorsprung 39 abgestützt, wobei der Vorsprung 39 jeweils eine zur radialen R parallelen Bewegung der Belagträger 11 nach außen und innen ermöglicht, und diese vorzugsweise abstützt, sowie ggf. führt.

Im gezeigten Ausführungsbeispiel ist es grundsätzlich möglich, sowohl den Kolben 19 radial zu führen als auch den Belagträger 11 an den Vorsprüngen 39, weil der Belagträger 11 und der Kolben 19 als zwei separaten Bauteile gefertigt sind, die sich in Umfangsrichtung zueinander theoretisch verschieben könnten. Dadurch ist eine statische Überbestimmung zuverlässig ausgeschlossen. Es ist genauso möglich den Kolben 19 und den Belagträger 11 einteilig auszuführen, damit angepasstem Führungskonzept.

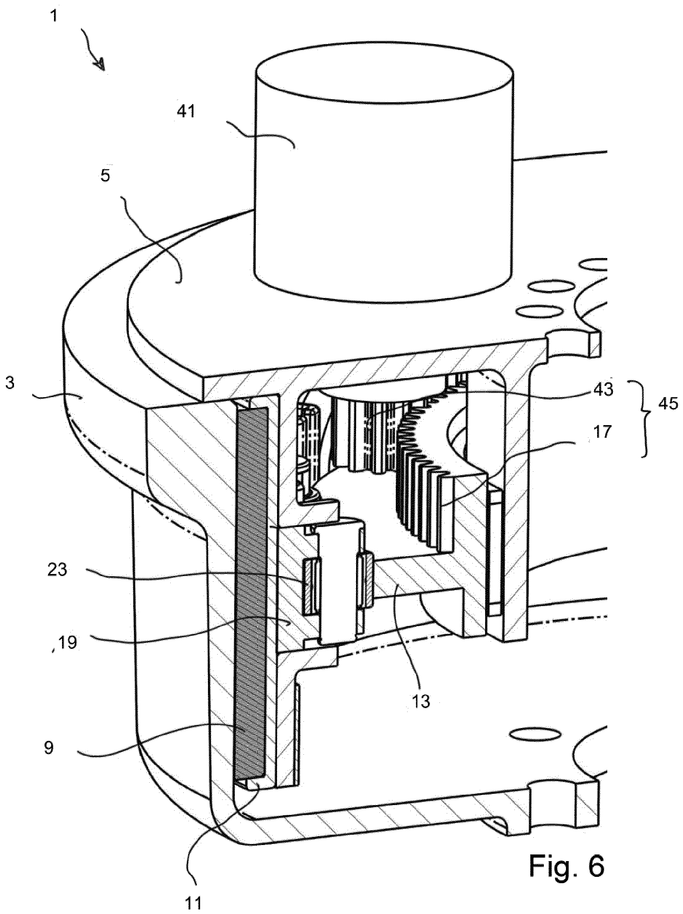

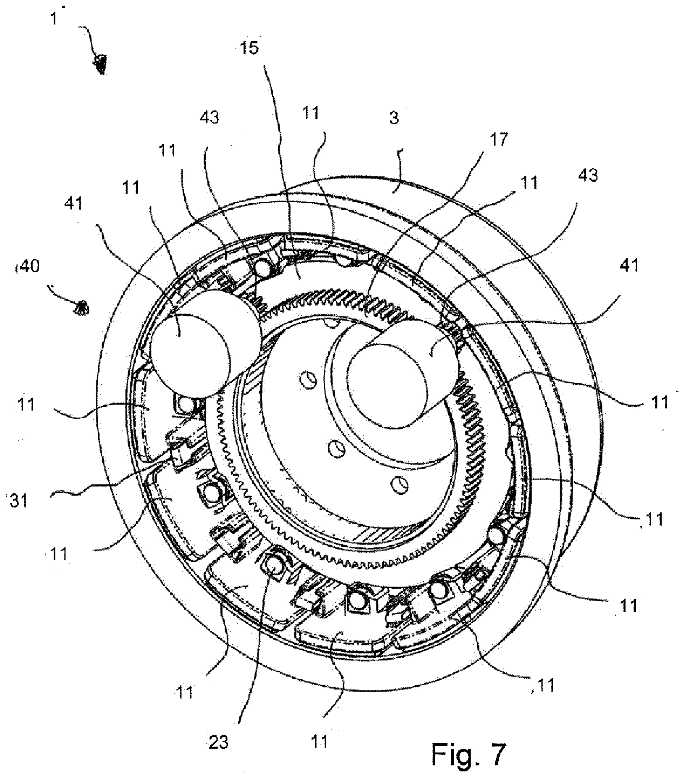

Nachdem die Figuren 1 - 5 im Wesentlichen den konstruktiven Aufbau der Bremsbelagsanordnung 7 und die Geometrie des Nockenrings 13 zeigen, illustrieren die Figuren 6 und 7 das Antriebskonzept der Trommelbremse 1.

Die Trommelbremse 1 weist eine elektromotorische Antriebseinheit 40 mit einer Mehrzahl, nämlich zwei, Elelktromotoren 41 auf, die direkt im Bremsträger 5 montiert sind, exemplarisch mit der Motoreinheit außerhalb des Trommelbremsgehäuses. Die Elektromotoren 41 weisen jeweils ein Antriebsritzel 43 auf, welches zusammen mit der Außenverzahnung 17 des Nockenrings 13 ein Getriebe 45, insbesondere ein einstufiges Stirnradgetriebe, ausbildet. Über die Ansteuerung der Elektromotoren 41 ist eine beliebige Wahl der Freilaufstellung und der Bremsstellung des Nockenrings 13 relativ zur Trommel 3 einstellbar, so dass auch im Laufe des Betriebs einsetzender Verschleiß an den Bremsbelagsegmenten 9 durch Anpassung der Freilaufstellung des Nockenrings 13 und damit auch der Kolben 19 ohne zusätzlichen externen apparativen Aufwand möglich wird.

Wie beispielsweise aus Fig. 7 ersichtlich wird, ist es nicht zwingend vorgeschrieben, die beiden Elektromotoren 41 in gezeigtem Abstand zueinander anzuordnen. Die Winkelabstände und damit die Positionierung der Elektromotoren 41 an der Trommelbremse 1, können im Rahmen der verfügbaren Einbauverhältnisse im Prinzip frei gewählt werden. Auch die Anzahl der Elektromotoren 41 kann, wie hier ersichtlich, in weiten Grenzen variiert werden.

Durch die Verwendung des erfindungsgemäßen Nockenrings 13 wird eine synchrone Bewegung aller Belagträger 11 und damit ein homogenes Bremsverhalten bei gleichzeitig konstruktiv einfach, aber präzise herstellbarem Aufbau erreicht. Die Verwendung externer Gestängesteller kann ersatzlos entfallen, so dass mit der Erfindung eine auch ökonomisch vielversprechende elektromotorisch angetriebene Trommelbremse vorgestellt werden kann.

### Bezugszeichenlist (Teil der Beschreibung)

- 1: Trommelbremse
- 3: Trommel
- 4, 6: Flansch
- 5: Bremsträger
- 7: Bremsbelaganordnung
- 9: Bremsbelagsegment
- 11: Belagträger
- 13: Nockenring
- 14: Wälzlageranordnung
- 15: Stutzen
- 17: Verzahnung
- 19: Kolben
- 21: Reibfläche
- 23: Rollenkörper
- 25: Nockenabschnitt
- 27: Verdrängungsfläche
- 29: Hub
- 31: Federring
- 33: Federelemente
- 35: Stützelemente
- 39: Vorsprung
- 40: Antriebseinrichtung
- 41: Elektromotor
- 43: Antriebsritzel
- 45: Stirnradgetriebe

- α: Winkelbereich, Nockenabschnitt
- R: Radialrichtung
- X: Rotationsachse, Nockenring
- F_{R}: Rückstellkraft

## Patentansprüche

1. Fahrzeug-Trommelbremse (1), insbesondere für Nutzfahrzeuge, mit einer Trommel (3) mit einer umlaufend ausgebildeten inneren Reibfläche (21), einem relativ zu der Trommel (3) drehbeweglich innerhalb der Trommel (3) angeordneten Bremsträger (5) und einer an dem Bremsträger (5) angeordneten Bremsbelagsanordnung (7),
**dadurch gekennzeichnet, dass** die Bremsbelagsanordnung (7) eine Mehrzahl radial beweglicher Belagträger (11) aufweist, an denen jeweils ein Bremsbelagsegment (9) der Reibfläche (21) zugewandt vorgesehen ist, wobei die Belagträger (11) jeweils unmittelbar mit einem gemeinsamen Nockenring (13) derart wirkverbunden sind, dass eine Rotationsbewegung des Nockenrings (13) in einer ersten Drehrichtung eine synchrone Zuspannbewegung aller Belagträger (11) bewirkt, und eine Rotationsbewegung des Nockenrings (13) in einer entgegengesetzten zweiten Drehrichtung eine synchrone Aufspannbewegung aller Belagträger (11) bewirkt.

2. Trommelbremse (1) nach Anspruch 1,
wobei die Mehrzahl der Belagträger (11) in einem Bereich von 6 Stück oder mehr, vorzugsweise 8 Stück oder mehr, besonders bevorzugt 12 Stück oder mehr liegt, und/oder
wobei die Belagträger (11) gleichmäßig über den Umfang des Bremsträgers (5) verteilt angeordnet sind.

3. Trommelbremse (1) nach Anspruch 1 oder 2,
wobei die Bremsbelagsegmente (9) jeweils zur vollflächigen Anlage an der Reibfläche (21) der Trommel (3) eingerichtet sind.

4. Trommelbremse (1) nach einem der vorstehenden Ansprüche,
wobei der Nockenring (13) für jedes Bremsbelagsegment (9) einen Nockenabschnitt (25) mit einem in der ersten Drehrichtung zunehmenden Hub (29) aufweist, wobei die Belagträger (11) jeweils an einem der Nockenabschnitte (25) anliegen.

5. Trommelbremse (1) nach einem der vorstehenden Ansprüche,
wobei die Belagträger (11) einen dem Nockenabschnitt (25) zugewandten Kolben (19) aufweisen, der radial beweglich in dem Bremsträger (5) angeordnet und dazu eingerichtet ist, mittels Verdrängung durch den Nockenabschnitt (25) bei Rotation des Nockenrings (13) zwischen einer zugespannten Bremsstellung und einer aufgespannten Freilaufstellung hin- und herbewegt zu werden.

6. Trommelbremse (1) nach Anspruch 5,
wobei der Kolben (19) an seinem dem Nockenabschnitt (25) zugewandten Ende einen am Kolben (19) gelagerten Rollenkörper (23) aufweist, der dazu eingerichtet ist, auf dem Nockenabschnitt (25) abzurollen.

7. Trommelbremse (1) nach einem der Ansprüche 5 oder 6,
wobei die Belagträger (11) in Richtung der Freilaufstellung gegen den Bremsträger (5) vorgespannt sind.

8. Trommelbremse (1) nach Anspruch 7,
mit einem Federring (31), der einerseits an den Belagträgern (11) und andererseits an dem Bremsträger (5) angreift und für jeden Belagträger (11) ein oder mehrere Federlemente (33) aufweist, welche dazu eingerichtet sind, auf den jeweiligen Belagträger (11) eine Rückstellkraft (F_{R}) in Richtung der Freilaufstellung aufzubringen.

9. Trommelbremse (1) nach einem der vorstehenden Ansprüche,
wobei die Belagträger (11) jeweils ein oder mehrere Stützelemente (35), insbesondere in Form von radial nach innen vorstehenden Stegen, aufweisen.

10. Trommelbremse (1) nach Anspruch 9,
wobei die Stützelemente (35) dazu eingerichtet sind, die Belagträger (9) in axialer Richtung, bezogen auf die Rotationsachse des Nockenrings (13), abzustützen, insbesondere zu führen.

11. Trommelbremse (1) nach Anspruch 9 oder 10,
wobei die Federlemente (33) an den Stützelementen (35) anliegen, vorzugsweise an korrespondierend zu den Federelementen (33) ausgebildeten Stegvorsprüngen (37), die in Umfangsrichtung von den Stegen vorstehen.

12. Trommelbremse (1) nach einem der vorstehenden Ansprüche,
wobei zwischen zwei benachbarten Belagträgern (11) jeweils ein sich nach außen erstreckender Vorsprung (39) angeordnet ist, an dem die Belagträger (9) in Umlaufrichtung abgestützt, und vorzugsweise parallel zur Bewegungsrichtung (R) der Kolben (19) beweglich geführt sind.

13. Trommelbremse (1) nach einem der vorstehenden Ansprüche,
wobei der Nockenabschnitt (25) eine Verdrängungsfläche (27) aufweist, die in einem Bereich zwischen der Freilaufstellung und der Bremsstellung eine zum Drehwinkel (α) des Nockenrings (13) proportionale Entwicklung des Hubs (29) aufweist.

14. Trommelbremse (1) nach einem der vorstehenden Ansprüche,
wobei der Bremsträger (5) eine elektromotorische Antriebseinrichtung aufweist, welche eine Anzahl von Elektromotoren (41) zum Antrieb des Nockenrings (13) aufweist.

15. Trommelbremse (1) nach Anspruch 14,
wobei die elektromotorische Antriebseinrichtung (40) ein Getriebe (45) aufweist, welches die Anzahl Elektromotoren (41) mit dem Nockenring (13) koppelt.

16. Trommelbremse (1) nach Anspruch 15,
wobei das Getriebe (45) ein einstufiges Getriebe ist, vorzugsweise ein Stirnradgetriebe, und wobei weiter vorzugsweise der Nockenring (13) eine Verzahnung (17) aufweist, mit welcher eine Anzahl korrespondierender Antriebsritzel (43) in Eingriff stehen, welche wiederum jeweils drehmomentübertragend an einem der Anzahl Elektromotoren (41) befestigt sind.

17. Trommelbremse (1) nach einem der vorstehenden Ansprüche,
wobei der Nockenring (13) mittels einer Wälzlageranordnung (14) am Bremsträger (5) gelagert ist.

18. Trommelbremse (1) nach einem der vorstehenden Ansprüche,
wobei die Bremsbelagsegmente (9) und die Belagträger (11) mittels Pressen miteinander verbunden sind.
